# EUROPÄISCHE PATENTSCHRIFT

(11) **EP 3 171 112 B1**
(45) Veröffentlichungstag und Bekanntmachung des Hinweises auf die Patenterteilung: **21.03.2018**
(21) Anmeldenummer: 16002396.6
(22) Anmeldetag: 11.11.2016
(51) Int. Cl.: F28D 19/04

(54) **REGENERATIVER WÄRMETAUSCHER UND KRAFTWERK**
REGENERATIVE HEAT EXCHANGER AND POWER PLANT
ÉCHANGEUR THERMIQUE RÉGÉNÉRATIF ET CENTRALE ÉLECTRIQUE

(30) Priorität: 23.11.2015 DE 102015015134
(43) Veröffentlichungstag der Anmeldung: 24.05.2017
(73) Patentinhaber: Balcke-Dürr GmbH, 40472 Düsseldorf (DE)
(72) Erfinder: Krenzel, Raymond, D-51671 Wiehl (DE); Kirsche, Armin, 02899 Schönau (DE)
(74) Vertreter: Heidler, Philipp

(56) Entgegenhaltungen:
- US-A- 2 761 654
- US-A- 5 137 078
- US-A- 5 727 617
- US-A1- 2014 374 053

## Beschreibung

Die vorliegende Erfindung betrifft einen regenerativen Wärmetauscher nach dem Oberbegriff des Anspruchs 1 und ein Kraftwerk mit einem solchen Wärmetauscher. Solch ein Wärmetauscher ist bekannt aus der Figur 1 aus US 5,727,617.

Regenerative Wärmetauscher, wie beispielsweise Regenerativ-Luftvorwärmer, werden in verschiedenen Typen von Dampfkraftwerken beispielsweise dazu eingesetzt, die verbleibende thermische Energie eines Rauchgases beim Verlassen eines Kessels zur Aufheizung der dem Kessel zugeführten Verbrennungsluft zu nutzen und somit die Effizienz des Kraftwerks zu steigern. Bevorzugt werden hierbei ein Verbrennungsluftstrom oder auch ein primärer und ein sekundärer Verbrennungsluftstrom und ein Rauchgasstrom nach dem Ljungström-Prinzip in entgegengesetzter Richtung durch eine rotierende Zwischenspeichermasse geführt. Ein weiteres typisches Einsatzgebiet dieser auch als Rotationswärmetauscher bezeichneten Vorrichtungen ist der Einsatz als Gasvorwärmer. Ferner sind Bauformen mit horizontaler und mit vertikaler Rotationsachse bekannt.

Eine Herausforderung bei der Konstruktion und beim Betrieb solcher regenerativer Wärmetauscher ist der Umgang mit Leckagen zwischen der Wärme abgebenden und der Wärme aufnehmenden Seite der Wärmetauschers, wodurch beispielsweise die Effizienz erheblich vermindert werden kann. Ein wesentlicher Anteil dieser Leckage ist beispielsweise auf Verbrennungsluft zurückzuführen, die über den Umfangsraum zwischen Rotor und dem statischen Gehäuse vom Luftsektor in den Rauchgassektor strömt und/oder Rauchgas, das in unerwünschter Weise in den Luftsektor strömt. Dadurch vermindert sich die Wärmeübertragungsleistung und eine klare Trennung zwischen Luftstrom und Rauchgas liegt nicht mehr vor, was beispielsweise auch zu Verunreinigungen auf der Luftseite und in nachgeordneten Aggregaten, wie beispielsweise Turbinen, führen kann. Zur Verminderung dieser Leckageeffekte ist es unter anderem bekannt, sogenannte Axialdichtungen vorzusehen. Durch Axialdichtungen wird konkret eine Dichtbarriere erhalten, die sich in Axialrichtung bzw. in Achsrichtung der Rotationsachse des Rotors, insbesondere im Bereich des Außenumfangs des Rotors und des Innenumfangs des Stators erstreckt. Die wesentliche Funktion der Axialdichtung betrifft somit der Verhinderung des Übertritts/Vermischens von Fluiden vom Luft- und Rauchgasbereich bzw. allgemein des Wärme aufnehmenden und des Wärme abgebenden Teils. Die Abdichtung wirkt dabei in Umlaufrichtung des Rotors, insbesondre an dessen Außenumfang, und erstreckt sich in Axialrichtung. Ferner ist es bekannt, bei gattungsgemäßen Wärmetauschern auch sogenannte Radialdichtungen zu verwenden, die im Wesentlichen eine Abdichtung auf der Eintritts- oder der Austrittsseite der den Rotor durchströmenden Fluide betrifft. Die vorliegende Erfindung betrifft insbesondere eine Axialdichtung.

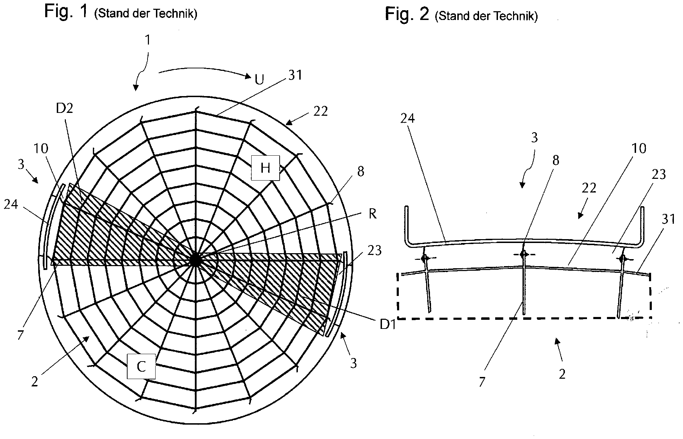

Ein typischer aus dem Stand der Technik bekannter Aufbau eines Wärmetauschers 1 mit einer solchen Axialdichtung ist in den Figuren 1 und 2 wiedergegeben. Der als Zwischenspeicher ausgebildete Rotor (2) des Wärmetauschers dreht sich innerhalb eines auch als Stator (22) bezeichneten Gehäuses, das den Rotor (2) in seinem Außenumfang umgibt, um eine zentrale Achse in Pfeilrichtung U. Radialwände (7) erstrecken sich innerhalb der Rotors vom Zentrum des Rotors (22) aus jeweils in Radialrichtung nach außen. Dazwischen sind Zwischenspeicherelemente (31) angeordnet, deren Funktion darin besteht, wechselweise beispielsweise einem Rauchgasstrom auf einer Heißseite H Wärme zu entziehen und diese in einen Verbrennungsluftstrom auf der Kaltseite C des Wärmetauschers 1 an das den Rotor 2 durchströmende Fluid abzugeben. Beispielsweise werden zu diesem Zweck Lamellen aus einem gut wärmeleitenden Werkstoff, beispielsweise Stahl, eingesetzt. Zwischen dem Rotor und dem Stator befindet sich in Radialrichtung ein Dichtspalt. Zu dessen Abdichtung in Umlaufrichtung der Rotors sind Axialdichtungen vorgesehen. Die Axialdichtung (3) besteht jeweils aus einer ortsfest an dem Stator (22) befestigten Dichtplatte (24), die in Kombination mit am Rotor (2), speziell an den Enden der Radialwände (7), befestigten Streifblechen (8) ein Abdichten von Luft- und Rauchgassektor bewirkt. Oberhalb und unterhalb (nicht sichtbar) des Rotors (2) sind ferner Dichtwände (D1 und D2) vorhanden, die die Heißseite H von der Kaltseite C trennen und gegenüber dem Stator (22) rotationsfest sind. Der Rotor (2) dreht somit an den Dichtwänden bzw. Dichtplatten (D1 und D2) in Richtung U vorbei. Die Dichtwände umfassen nicht näher gezeigte Radialdichtungen.

Konkret offenbart beispielsweise die DE 69700699 T2 einen solchen regenerativen Wärmetauscher mit einer derartigen Axialdichtung, wobei eine Platte als ortsfestes Dichtungselement eingesetzt wird. Zusätzlich sind am Rotor Streifbleche an den äußeren Enden der Membranplatten angebracht, die in Radialrichtung von der Rotorumfangsfläche deutlich über den Dichtspalt vorstehen und in Kombination mit der ortsfesten, statorseitigen Platte ein Abdichten von Rauchgas und Luftseite bzw. Heißseite H gegenüber Kaltseite C im Umfangsraum bewirken.

Die CN 101614403 beschreibt ebenfalls eine Axialdichtung für einen regenerativen Wärmetauscher mit am Rotor befestigten, radial vorstehenden Streifblechen, die gegen Dichtungsbürsten abdichten, die wiederum ortsfest auf einer Platte befestigt sind. Die WO 0190646 A1 behandelt ein Verfahren zur Modernisierung der radialen und axialen Dichtungen eines regenerativen Wärmetauschers. Im Bereich der Axialdichtung werden auch hier am Rotor befestigte, radial vorstehende rotierende Streifbleche eingesetzt, die gegen eine ortsfeste Platte dichten. Die US 2002112842 A1 bezieht sich auf den Aufbau einer axialen Dichtplatte, die, analog zu allen zuvor genannten Schriften, als ortsfeste Dichteinheit gegen den rotierenden Rotor eingesetzt wird. Schließlich betrifft US 5727617 A eine Methode zur Stabilisierung der Dichtplatten, also sowohl der radialen Sektorplatte als auch der Axialplatte. Erneut basiert hier die beschriebene Axialdichtung auf einer ortsfesten Dichtplatte.

Diese bislang übliche Axialdichtungskonstruktion bringt jedoch eine Reihe von Nachteilen mit sich. Einerseits in ist das hohe Gewicht der Dichtplatten zu nennen, mit dem eine komplizierte und aufwändige Montage und Instandhaltung am Stator einhergehen. Hinzu kommt die unzureichende Regelbarkeit der Dichtung, denn durch die Verformung von Rotor und Gehäuse im Betrieb ist für einen optimalen Dichtungseffekt in allen Lastfällen ein Nachjustieren der Dichtplattenposition erforderlich, um den Spalt zwischen Dichtplatte und Streifblechen über die komplette Länge zu minimieren. Dies ist bei den existierenden Axialdichtungskonstruktionen jedoch nicht oder wenn nur mit erheblichem Aufwand möglich. Ein weiterer Nachteil besteht zudem in der Schleusleckage im Bereich der Axialdichtung. Die Schleusleckage entsteht dadurch, dass beim Rotieren des Rotors ein Teil des Verbrennungsluft- bzw. Rauchgasstromes in dem Totraum zwischen zwei benachbarten Streifblechen mitgeschleppt wird, so dass beispielsweise Rauchgas in unerwünschter Weise auf die Kaltseite C "geschaufelt" wird. Sie tritt zusätzlich zu der Axialleckage auf, die durch die Druckdifferenz zwischen Luft- und Rauchgasseite entsteht.

Die Aufgabe der vorliegenden Erfindung ist es daher, einen regenerativen Wärmetauscher der gattungsgemäßen Art mit einem optimierten Axialdichtungssystem anzugeben, das deutlich leichter und damit preisgünstiger, effizienter und leichter zu warten ist, und bei dem insbesondere die vorgenannten Nachteile nicht mehr oder zumindest nicht mehr so deutlich auftreten.

Die Lösung der Aufgabe gelingt durch die Gegenstände der unabhängigen Ansprüche. Bevorzugte Weiterbildungen sind in den abhängigen Ansprüchen angegeben.

Konkret gelingt die Lösung der Aufgabe mit einem regenerativen Wärmetauscher, bei dem der Rotor eine umlaufende, gleichmäßige und geschlossene Dichtfläche umfasst. Wenigstens ein den Rotor umlaufender Teilbereich des Rotorumfangs ist damit frei von Vorsprüngen in Radialrichtung ausgebildet und bildet eine in Umlaufrichtung kontinuierliche, unterbrechungs- und/oder erhebungs- und/oder vertiefungsfreie Umfangsaußenmantelfläche, die insbesondere eine Anlage- und Abdichtfläche für ein vom Stator kommendes und sich in Radialrichtung über den Dichtspalt erstreckendes Dichtelement der Dichteinheit bildet. Die Dichteinheit erstreckt sich dabei in Axialrichtung über wenigstens 80%, insbesondere über wenigstens 85% und ganz besonders über wenigstens 90% einer axialen Höhe des Rotors. Dadurch ist gewährleistet, dass sich die Axialdichtung über einen ausreichend großen Bereich in Axialrichtung erstreckt, wodurch eine effiziente Axialabdichtung erreicht wird. Es ist auch von der Erfindung mit umfasst, dass das wenigstens eine Dichtelement nicht direkt an der Dichtfläche des Rotors anliegt, aber zumindest möglichst nah, insbesondere bis auf wenige Zentimeter und ganze besonders bis auf wenige Millimeter, an diese heranreicht. Dies kann Verschleißerscheinungen an der Dichtfläche und/oder am Dichtelement mindern. Auch bei dieser Alternativ steht aber die Dichteinrichtung, insbesondere mit dem wenigstens einen Dichtelement, in den Dichtspalt zum Rotor hin vor, der die vorstehende beschriebene glatte Dichtfläche aufweist. Der Rotor wird somit mit anderen Worten in Bezug auf seine Dicke bzw. seine Höhe in Axialrichtung wenigstens teilweise und insbesondere vollständig umlaufend von einem gleichmäßigen, geschlossenen Rotormantel begrenzt. Die Dicke bzw. Höhe in Axialrichtung bezeichnet den Abstand des Rotors in Axialrichtung seiner Rotationsachse zwischen seinen Stirnseiten, d.h. bei einem Rotor mit vertikaler Rotationsachse somit seine Höhe in Axialrichtung zwischen seiner Oberseite und seiner Unterseite, wobei hiervon der Bereich einer zentralen Wellenanbindung ausgenommen ist. Wenigstens im Bereich der Dichtfläche ist der Rotor somit zylinderförmig ausgebildet bzw. weist die Außenumfangsfläche eines Zylinders auf. Diese gleichmäßige, den Rotor vollständig umlaufende Bereich wird nun zu Dichtzwecken genutzt. Erfindungsgemäß ragen somit die Enden der Radialwände des Rotors nicht mehr in den Dichtspalt zwischen Rotor und Stator hinein. Das Auftreten von Schleusleckage durch Toträume zwischen den Radialwandenden wird damit nahezu vollständig eliminiert. In gewisser Weise liegt der Erfindung also die Idee zugrunde, den Aufbau der Axialdichtung gegenüber den im Stand der Technik bekannten Axialdichtungen umzukehren. Anstelle einer lokalen, statorseitigen Dichtplatte tritt der geschlossene Rotormantel, der rotorseitig als umlaufende Dichtfläche wirkt. Auf diese Weise kann auf ein aufwändiges Nachjustieren einer Dichtplatte verzichtet werden. Zudem ist es nicht mehr erforderlich eine Vielzahl von über den Umfang des Rotors verteilt angeordneten Dichtblechen am Rotor anzuordnen, wodurch beispielsweise Wartungsarbeiten erheblich verkürzt werden können.

Der erfindungsgemäß wenigstens teilweise glatte, überstandsfreie Rotorumfang kann grundsätzlich auf verschiedene Arten und Weisen erreicht werden. Im einfachsten Fall werden die Außenwände der in Radialrichtung außenliegenden Zellen des Rotors mit einer entsprechend gebogenen Außenwand bereitgestellt, die in ihrer Gesamtheit eine im Umfang kreisförmige Außenwand bilden. Bevorzugt ist allerdings ein Totraumring vorhanden, der zwischen dem eigentlichen Wärmetauschbereich des Rotors und dessen Außenmantelfläche angeordnet ist. Dieser Bereich ist nicht dazu vorgesehen, von einem Fluid zwecks Wärmetausch durchströmt zu werden, sondern dient im Wesentlichen zur Bereitstellung der Dichtfläche und weiterer Dichtfunktionen, wie beispielsweise der Radialdichtung in Außenbereich. Bevorzugt wird der Totraumring allerdings durch eine Vielzahl in Umlaufrichtung im Außenbereich des Rotors angeordneter Einzelparzellen gebildet, insbesondere in Verlängerung von den Rotor in Segmente unterteilenden Radialwänden. In diesem Fall können beispielsweise Kassetten vorgesehen sein, die an die Enden der Radialwände angesetzt werden und mit ihrer Außenwand in der Summe die erfindungsgemäß erforderliche umlaufende Dichtmantelwand bilden. Insbesondere werden hierzu solche Kassetten verwendet, die auf ihrer im eingebauten Zustand vom Stator abgewandten Innenseite zudem mit Querstreben verstärkt sind. Auf diese Weise können die Kassetten den teilweise extremen Temperaturschwankungen in dem regenerativen Wärmetauscher besser standhalten.

Vorzugsweise wird der Totraumring in Axialrichtung nach oben und/oder nach unten hin bzw. in Axialrichtung gesehen auf einer oder beiden Außenseiten verschlossen ausgebildet, beispielsweise durch eine speziell hierfür vorgesehene Querstrebe oder eine alternative Außenwand/- abdichtung. Dann ist zusätzlich sichergestellt, dass auch der Kassetteninnenraum nicht als Vehikel für den Fluidtransfer zwischen Heiß- und Kaltseite wirkt und damit eine Schleusleckage bewirkt.

Eine besonders gute Dichtungswirkung der Axialdichtung lässt sich erreichen, wenn auf der Statorseite des Dichtspalts zwischen Rotor und Stator ein abdichtend wirkendes Gegenstück zu dem geschlossenen Rotorumfang vorhanden ist. Der regenerative Wärmetauscher umfasst daher eine an dem Stator gelagerte Dichteinheit, die insbesondere im Wesentlichen ortsfest auf der dem Rotor zugewandten Seite des Stators angeordnet ist und zusammen mit dem geschlossenen Rotormantel die Axialdichtung bildet. Im Wesentlichen ortsfest zum Stator bedeutet dabei, dass hiervon durchaus noch Stellbewegungen der Dichteinheit, insbesondere in Radialrichtung, mit umfasst sind, beispielsweise zum Ausgleich thermischer Verformungserscheinungen und/oder von Verschleißeffekten, insbesondere an den Dichtelementen. Wesentlich ist, dass sich die in den Dichtspalt vom Stator aus vorspringende Dichteinheit nicht mit dem Rotor mitdreht.

Vorzugsweise ist diese Dichteinheit somit zumindest insoweit als verstellbare Dichteinheit ausgebildet, so dass sie in Bezug auf die Dichtfläche nachjustiert werden kann. Die Einstellung der verstellbaren Dichteinheit im Betrieb erfolgt dabei bevorzugt über ein auf einer Federbeaufschlagung, beispielsweise mit einer Springfeder, basierendes Verstellsystem, das die verstellbare Dichteinheit stets leicht an den geschlossenen Rotorumfang andrückt. Alternativ sind hier auch pneumatisch, elektrisch und/oder hydraulisch betätigbare Verstelleinheiten möglich und von der Erfindung mit umfasst.

Der Antrieb des Rotors eines regenerativen Wärmetauschers erfolgt häufig mit Hilfe eines Triebkranzes, umfassend eine Vielzahl von Eingriffelementen, beispielsweise Triebkranzbolzen oder Flanken einer Zahnradstruktur. Der Triebkranz ist vorzugsweise an der an der dem Stator zugewandten Oberfläche bzw. Seite des Rotors angeordnet. Von der Statorseite kommend ist dann ein entsprechender Antrieb vorgesehen, beispielsweise ein angetriebenes Rad mit Eingriffelementen. Vorliegend ist der Triebkranz vorzugsweise zur Mitte des Rotormantels (in Bezug auf seine axiale Erstreckung in Richtung der Rotationsachse) versetzt angeordnet, insbesondere im unteren oder oberen Drittel, bevorzugt im der Kaltseite zugewandten Drittel. Für diese Ausführungsform ist es besonders bevorzugt vorgesehen, dass jeweils oberhalb und unterhalb des Triebkranzes eine umlaufende, geschlossene Dichtfläche, wie vorstehend beschrieben, vorhanden ist. Eine Vervielfachung der vorhandenen Dichtflächen ist selbstverständlich auch ohne die vorstehend beschriebene konkrete Anordnung des Triebkranzes möglich und von der Erfindung mit umfasst. Auf diese Weise ist eine Axialdichtung ober- und unterhalb des Triebkranzes möglich, wodurch besonders gute Abdichtergebnisse erhalten werden.

Der Bereich des Triebkranzes stellt in Bezug auf eine möglichst umfassende Abdichtung einen kritischen Bereich für die Dichtungswirkung der Axialdichtung dar, da an dieser Stelle funktionsbedingt keine dauerhafte Anlage eines Dichtelementes am Rotor möglich ist. Es ist daher für diesen Bereich bevorzugt vorgesehen, dass alternative Maßnahmen zur Abdichtung getroffen werden. Bevorzugt ist es, wenn hierzu spezielle Abdichtbleche vorhanden sind oder die vorhandenen Dicht-/Streifbleche der statorseitigen Dichteinrichtungen derart ausgebildet sind, dass sie eine zum Triebkranz in Radialrichtung vorspringende Ausbuchtung aufweisen. Auf dieser Weise wird der Freiraum zwischen der Dichtkante des Dichtbleches und der Außenseite des Triebkranzes klein gehalten. Die Ausbuchtung ist derart bemessen, dass sie in eine Triebkranzausnehmung hineinragt.

Optimal ist es ferner, wenn zwischen den in Radialrichtung außenliegenden Bereichen der Eingriffelemente des Triebkranzes eine rotorseitige Dichteinrichtung vorhanden ist, die die zwischen den einzelnen Eingriffelementen in Umlaufrichtung des Rotors liegenden Freiräume abdichtet. Hierzu können beispielsweise rückversetzte Sperrwände/-bleche vorhanden sein, die die in Umlaufrichtung nebeneinander liegenden Eingriffelemente miteinander zum Stator hin abdichtend verbinden. Dabei ist zu berücksichtigen, dass der Antrieb des Rotors nach wie vor ungehindert in die Triebkranzbolzen eingreifen können muss. Eine solche Sperrwand kann somit beispielsweise einen im Wesentlichen in Umfangsrichtung verlaufenden Rückwandteil und zwei schräg zum Eingriffelement hin verlaufende Seitenwandteile aufweisen. Alternativ kann diese Sperrwand auch zur Rotormitte hin gerichtet gekurvt bzw. eingewölbt ausgebildet sein.

Regenerative Wärmetauscher arbeiten im Allgemeinen nach dem Gegenstromprinzip und umfassen in Bezug auf die Stirnseiten des Rotors somit eine Reinseite und eine Kaltseite. Der rotierende Rotor wird somit gleichzeitig von einem heißen zu kühlendem Fluid und einem kalten zu erwärmenden Fluid durchströmt. Dabei dreht sich der Rotor um seine Rotationsachse (die nachstehend verwendete Bezeichnung "in Axialrichtung" bezieht sich auf die Richtung der Rotationsachse). Der Rotor wird somit beim Drehen in grob einer Hälfte aufgewärmt (hier gibt das Fluid Wärme an den Rotor ab) und in grob der anderen Hälfte abgekühlt (hier nimmt das Fluid Wärme vom Rotor auf). Die Axialdichtung dichtet diese beiden Hälften im Außenumfangsbereich des Rotors gegeneinander ab, um in diesem Bereich entsprechende Leckage zu verhindern oder zumindest zu vermindern. Die Axialdichtung kann hierbei als einzonige Dichtung mit einer einzelnen Dichteinheit zwischen Heißseite und Kaltseite ausgelegt sein. Bevorzugt ist die Axialdichtung jedoch als mehrzonige, bevorzugt wenigstens als eine zweizonige Dichtung ausgebildet, bei der zwischen Reinseite und Abgasseite zwei voneinander entlang des Rotorumfanges voneinander beabstandete Dichteinheiten angeordnet sind. Die Festlegung der Zonen erfolgt somit in Umlaufrichtung des Rotors gesehen.

Konkret verfügt die Dichteinheit vorzugsweise über wenigstens einen Dichtkopf, an dem wenigstens ein Dicht- bzw. Streifblech und bevorzugt eine Vielzahl von Dicht- bzw. Streifblechen angebracht ist, wobei die Dicht-/Streifbleche bevorzugt wenigstens annähernd senkrecht von der dem Rotor zugewandten Seite des Dichtkopfes abstehen. Die Streifbleche dichten gegen die geschlossene Dichtfläche ab und liegen, bevorzugt kraftbeaufschlagt, an dieser an. Die Dichtbleche stehen in den Dichtspalt von der Statorseite aus bis möglichst nah an die Dichtfläche vor, streifen aber nicht an dieser entlang. Die Verwendung von Streifblechen für die Axialdichtung bringt den Vorteil mit sich, dass diese kostengünstig sind, im Bedarfsfall einfach und schnell austauschbar sind und aufgrund ihres geringen Gewichts auch hinsichtlich ihrer Position ohne großen Kraftaufwand verstellt werden können. Die Streifbleche sind typischerweise als geschlossene, plattenartige Bleche ausgebildet und weisen eine Dicke von 0,5 mm bis 2,5 mm, vorzugsweise von 0,75 mm bis 2 mm und besonders bevorzugt von 1 mm bis 1,5 mm auf. Die Streifbleche sind ferner bevorzugt jeweils einstückig ausgebildet und erstrecken sich somit einstückig in Axialrichtung über wenigstens 80%, insbesondere über wenigstens 85% und ganz besonders über wenigstens 90% der axialen Höhe des Rotors.

Bevorzugt ist es, wenn die Dicht/-Streifbleche hierbei eine im Wesentlichen rechteckige Geometrie aufweisen, mit einer zusätzlichen rechteckigen Ausbuchtung im Bereich des Triebkranzes. Insbesondere können die Dicht-/Streifbleche allerdings in ihrem Übergangsbereich zwischen Außenkante und Seitenkanten gerundet oder abgewinkelt ausgebildet sein. Dies kann etwa zur Verminderung von Verschleiß an den Streifblechen beitragen.

Die Zahl der Dicht-/Streifbleche ist grundsätzlich variabel. Bevorzugt umfasst die Dichteinheit allerdings zwischen 2 und 20, insbesondere zwischen 5 und 10 Dicht-/Streifbleche, und ganz besonders 8 Dicht-/Streifbleche. Eine alternative Ausführungsform sieht vor, dass die Dicht-/Streifbleche nicht als geschlossene, plattenartige Bleche ausgebildet sind, sondern als Dichtungsbürsten.

Das Andrücken der Dichteinheiten an den geschlossenen Rotorumfang über eine Verstelleinrichtung kann grundsätzlich mit einer größeren Auswahl geeigneter Kraftquellen erreicht werden. Als besonders simple und robuste Methode hat sich jedoch der Einsatz einer Feder bewährt, mit welcher die Dichteinheit beaufschlagt wird. Beispielsweise kann hier eine Druck-/Sprungfeder zum Einsatz kommen.

Die Dichteinheit bewegt sich zum Zweck der Verstellung bevorzugt auf einer Schiene, die in Radialrichtung zum Rotor angeordnet ist und so unterschiedliche Einstelldistanzen der Dichteinheit zum Rotor zulässt.

Es ist auch denkbar, dass mehrere Dichteinheiten miteinander verbunden oder mechanisch gekoppelt sind, beispielsweise um sie mit einer gemeinsamen Verstelleinrichtung zu verstellen. Die Dichteinheiten können dann in Axialrichtung oder in Umfangsrichtung des Rotors voneinander beabstandet angeordnet sein.

Um den Wartungsprozess des erfindungsgemäßen regenerativen Wärmetauschers zu vereinfachen, sieht eine bevorzugte Ausführungsform vor, dass die Axialdichtung eine Wartungseinrichtung für die Dichteinheit umfasst, mit der die Dichteinheit ausgetauscht werden kann, falls einmal Abnutzungserscheinungen an den Streifblechen auftreten sollten. Insbesondere ist es dabei vorgesehen, dass die Wartungseinrichtung ein Schienensystem umfasst, auf dem die Dichteinheit aus der Dichtposition entfernt und ausgetauscht werden kann. Ganz besonders bevorzugt handelt es sich hierbei um diejenige Schiene, auf der die Dichteinheit auch von der Sprungfeder gegen die Außenoberfläche des Rotormantels geschoben wird.

Regenerative Wärmetauscher der erfindungsgemäßen Art können in praktisch allen Anlagen eingesetzt werden, aus denen ein aufgeheiztes Abgas an die Umgebung abgegeben wird. Dabei ermöglichen derartige Wärmetauscher eine Rückgewinnung von Wärmeenergie und können zudem als Ansatzpunkte für Filter genutzt werden, so dass sie neben dem wirtschaftlichen Nutzen auch zur Schonung der Umwelt beitragen können. Insbesondere werden regenerative Wärmetauscher der erfindungsgemäßen Art in Kraftwerken eingesetzt. Daher gelingt die Lösung der Aufgabe weiterhin auch mit einem Kraftwerk, welches einen regenerativen Wärmetauscher der zuvor beschriebenen Art umfasst.

Nachstehend wird die Erfindung anhand der in den Figuren angegebenen Ausführungsbeispiele näher erläutert. Es zeigen schematisch:
- Fig. 1:: ein aus dem Stand der Technik bekannter regenerativer Wärmetauscher mit einer Draufsicht;
- Fig. 2: eine Ausschnittvergrößerung des Axialdichtbereiches aus Fig. 1;
- Fig. 3:: einen erfindungsgemäßen regenerativen Wärmetauscher in einer Draufsicht;
- Fig. 4:: eine Axialdichtung eines erfindungsgemäßen regenerativen Wärmetauschers in einer Draufsicht;
- Fig. 5:: einen Rotorumfangs eines erfindungsgemäßen regenerativen Wärmetauschers in einer perspektivischen Seitenansicht.
- Fig. 6:: eine Kassette für einen erfindungsgemäßen regenerativen Wärmetauschers aus einer perspektivischen Seitenansicht.
- Fig. 7:: eine Axialdichtung eines erfindungsgemäßen regenerativen Wärmetauschers aus einer perspektivischen Draufsicht;
- Fig. 8:: einen Triebkranzbereich eines erfindungsgemäßen regenerativen Wärmetauschers aus einer Seitenansicht;
- Fig. 9:: einen Triebkranzbereich eines erfindungsgemäßen regenerativen Wärmetauschers aus einer perspektivischen Draufsicht;
- Fig. 10:: einen Dichteinheitsbereich eines erfindungsgemäßen regenerativen Wärmetauschers aus einer Draufsicht;

Gleiche Bauteile sind in den Figuren mit gleichen Bezugszeichen angegeben, wobei nicht jedes sich in den Figuren wiederholende Bauteil durchgehend separat bezeichnet sein muss.

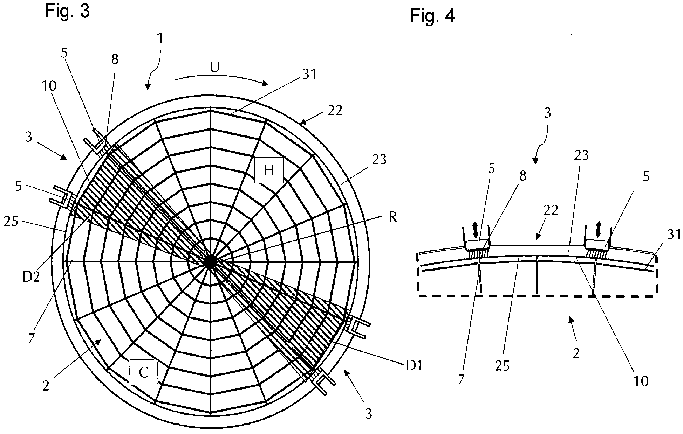

Die Figuren 3 und 4 zeigen einen erfindungsgemäßen regenerativen Wärmetauscher 1 in einer Draufsicht, wobei Figur 4 speziell den Bereich der Axialdichtung 3 im Ausschnitt darstellt. Zum Grundaufbau wird auf die vorstehenden Ausführungen zum Stand der Technik gemäß den Figuren 1 und 2 Bezug genommen. Im Betrieb rotiert der Rotor 2 um die Rotationsachse R.

Im Unterschied zum Stand der Technik verdeutlichen die Ansichten aus den Figuren 3 und 4 insbesondere die umlaufende, kreisförmige, geschlossene Dichtfläche 25, die frei von Überständen oder Unterbrechungen in Umlaufrichtung ist. Ferner sind verstellbare, am Stator 22 angebrachte Dichteinheiten 5 vorhanden.

Die im Außenumfangsbereich des Rotors angeordneten Kassetten 6 bilden einen ringförmigen Totraumbereich 10 bzw. Totraumring, der durch die außen liegenden Enden 11 der Radialwände 7 parzelliert wird, und schaffen so die geschlossene Dichtfläche 25. Der umlaufende Totraumbereich 10 ist nicht zur Durchströmung durch ein Fluid vorgesehen und dient somit auch nicht primär dem Wärmeaustausch. Der Totraumring schafft im Wesentlichen eine runde, in Umlaufrichtung hin- J dernisfreie Dchtfläche 25 und kann zudem bessere Dichtergebnisse auch in Radialrichtung im Außenrandbereich des Rotors ermöglichen.

Die Dichteinheiten 5 sind auf der Seite des Stators 22 gelagert und reichen vom Stator 22 aus kommend mit Streifblechen über den Dichtspalt 23 zwischen Rotor 2 und Stator 22 hinweg bis an die Dichtfläche 25 und liegen dort an. Die Dichteinheiten 5 sind in Radialrichtung verstellbar und weisen an ihren dem Rotor 2 zugewandten Seiten jeweils eine Vielzahl von Streifblechen 8 auf, die gegen die geschlossene Dichtfläche 25 abdichten.

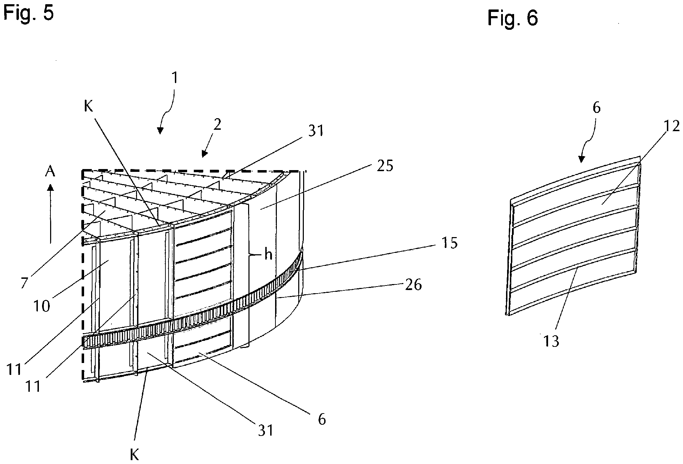

Die Figuren 5 und 6 verdeutlichen die geschlossene Ausbildung der Dichtfläche 25 weiter. Zu erkennen ist in Figur 5 aus der perspektivischen Ansicht, dass der Rotor 2 zwei übereinander angeordnete geschlossene Dichtflächen 25 aufweist, die durch einen Triebkranz 15 für den Antrieb des Rotors 2 voneinander getrennt sind. In Axialrichtung A bzw. in Richtung der Rotationsachse R des Rotors 2 gesehen ist der Triebkranz 15 somit zwischen den beiden Dichtflächen 25 angeordnet. Ebenfalls ersichtlich ist hier der ringförmige Totraumbereich 10, der den Außenumfangsbereich des Rotors 2 bildet. Die Axialrichtung A verläuft somit senkrecht zur Umlaufrichtung U. In Axialrichtung weist der Rotor 2 eine Höhe h auf. Es ist vorgesehen, dass sich die Steifbleche 8 der Dichteinheit 5 über wenigstens 80%, insbesondere über wenigstens 85% und ganz besonders über wenigstens 90% der Höhe h des Rotors erstrecken, um eine effiziente Axialabdichtung zu erreichen.

In der Figur 6 ist die Kassette 6 noch einmal weiter im Detail dargestellt, wobei hier die im Einbauzustand vom Stator 22 abgewandte Innenseite 12 der Kassette 6 gezeigt ist. An dieser Innenseite 12 wird die Kassette 6 durch Querstreben 13 verstärkt, die trotz der teilweise extremen Temperaturschwankungen im regenerativen Wärmetauscher 1 für eine ausreichende Stabilität der Kassetten 6 sorgen.

Aus der Zusammenschau der Figuren 3 bis 6 ergibt sich insbesondere, dass die Kassetten 6 somit die Bereitstellung einer im Wesentlichen kreisrunden Außenumfangsfläche des Rotors ermöglichen, die erfindungsgemäß als Dichtfläche als Teil der Axialdichtung genutzt wird. Die Kassetten gleichen in Radialrichtung nach außen hin die gradlinige, nicht runde Ausbildung der in Radialrichtung außen liegenden Wärmetauscherparzellen hin zu einer gerundeten, kreissegmentartig ausgebildeten Außenwand aus. Dadurch kann ohne aufwändige Modifikationen für den bisherigen Parzellenaufbau solcher Rotoren von regenerativen Wärmtauschern eine im Wesentlichen kreisrunde Außenmantelfläche des Rotors bereits gestellt werden.

Zur Abdichtung jeder Parzelle des Totraumringes umfasst des Außenwandblech der in Radialrichtung außenliegenden Wärmetauscherparzelle zur Kassette 6 hin in Axialrichtung A gesehen am oberen und am unteren Außenwandende jeweils ein Kröpfblech K auf, welche in Radialrichtung in Richtung der Außenmantelfläche des Rotors vorstehen. Das Kröpfblech K kann auch ein separates Wandelement sein und ergänzend oder alternativ auch teil der Kassette 6 sein. Die Kröpfbleche K schließen den Totraum der jeweiligen Parzelle in Axialrichtung nach außen hin ab.

Alternativ ist es auch denkbar und von der Erfindung mit umfasst, auf die Kassettenelemente zu verzichten und unmittelbar die Außenwand der in Radialrichtung außenliegenden Parzellen des Rotors mit einer entsprechend kreissegmentförmig ausgebildeten Außenwand zu versehen.

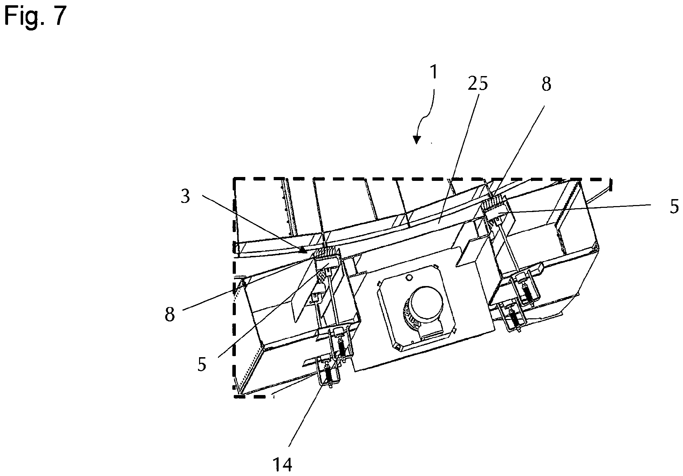

Die Figur 7 stellt den Dichtungsbereich einer zweizonigen Ausführungsform einer Axialdichtung 3 eines erfindungsgemäßen regenerativen Wärmetauschers 1 aus einer perspektivischen Draufsicht dar. Zusätzlich zu den bereits in den vorangehenden Figuren erkennbaren Elementen des regenerativen Wärmetauschers 1 sind hier auch die Verstelleinrichtungen 14 der Dichteinheiten 5 dargestellt. Diese sind so konfiguriert, dass die Streifbleche 8 der Dichteinheiten 5 stets an die geschlossene Dichtfläche 25 gedrückt werden.

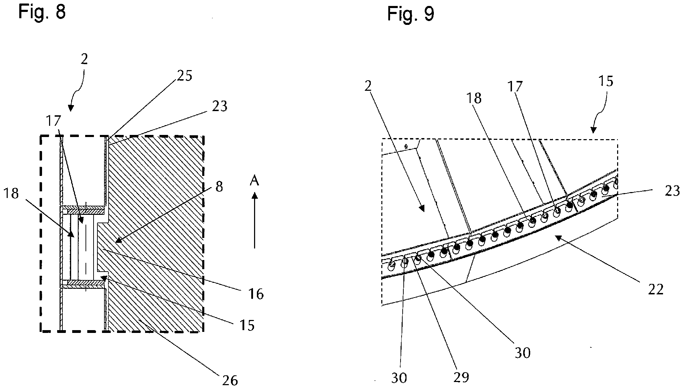

Ein für die Abdichtung der Axialdichtung 3 kritischer Bereich ist der Bereich des Triebkranzes 15, wie er in den Figuren 8 und 9 dargestellt ist. Um die Effizienz der Dichtung zu erhöhen, verfügen die Streifbleche 8 an dieser Stelle über eine Ausbuchtung 16, die in den als Ausnehmung ausgebildeten Bereich des Triebkranzes 15 mit den Triebkranzbolzen 17 hineinreicht. Zugleich sind auf der dem Stator abgewandten Seite der Triebkranzbolzen 17 diese über Sperrbleche 18 abgedichtet. Beide Maßnahmen verkleinern erheblich den Querschnitt des Dichtspaltes 23 zwischen Rotor 2 und Stator 22 an dieser Stelle und tragen so zu einer besonders effektiven Wirkung der Axialdichtung 3 bei. Die Sperrbleche 18 setzen dabei jeweils an der Rückseite der Triebkranzbolzen 17 an und verbinden diese mit einer nach innen gewölbten Fläche, die sich aus zwei schräg nach innen verlaufenden Rückzugsflächen 30 und einer Verbindungsfläche 29 zusammensetzt.

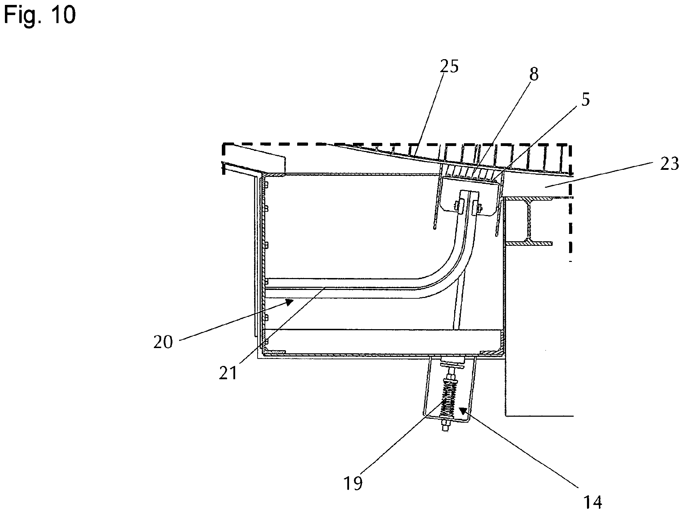

Die Figur 10 verdeutlicht die Arbeitsweise der Verstelleinrichtung 14 dar, die über die Beaufschlagung mit einer Sprungfeder 19 die Axialdichtung 3 und insbesondere die Streifbleche 8 gegen die geschlossene Dichtfläche 25 drückt. Weiterhin ist hier auch eine Wartungseinrichtung 20 mit einer Schiene 21 gezeigt, auf der der die gesamte Dichtungseinheit 5 mit den Streifblechen 8 auf aufwandsarme Weise ausgewechselt werden kann, falls eine durch den Betrieb bedingte Abnutzung der Streifbleche 8 dies erforderlich machen sollte.

## Patentansprüche

1. Regenerativer Wärmetauscher (1), umfassend einen Rotor (2), der als Zwischenspeicher mit einer Vielzahl von Radialwänden (7) ausgebildet ist, einen den Rotor (2) in seinem Außenumfang umgebenden Stator (22), wobei sich ein umlaufender Dichtspalt (23) zwischen dem Rotor (2) und dem Stator (22) ergibt, und eine Axialdichtung (3) mit wenigstens einer Dichteinheit (5) zur lokalen Abdichtung des Dichtspalts (23),
**dadurch gekennzeichnet,**
**dass** die Dichteinheit (5) so angeordnet ist, dass sie von dem Stator (22) aus in Richtung des Rotors (2) teilweise in den Dichtspalt (23) vorspringt, dass sich die Dichteinheit (5) über wenigstens 80% einer axialen Höhe (h) des Rotors (2) erstreckt, und dass der Rotor eine glatte, den Rotor (2) umlaufende, im Wesentlichen geschlossenen Dichtfläche (25) aufweist.

2. Regenerativer Wärmetauscher (1) nach Anspruch 1,
**dadurch gekennzeichnet,**
**dass** die Dichteinheit (5) soweit vom Stator (22) vorspringt, dass sie zur Anlage an der Dichtfläche (25) des Rotors (2) gelangt.

3. Regenerativer Wärmetauscher (1) nach einem der vorhergehenden Ansprüche,
**dadurch gekennzeichnet,**
**dass** der Rotor einen Totraumring aufweist, der zwischen dem Zwischenspeicher und der Dichtfläche verläuft.

4. Regenerativer Wärmetauscher (1) nach Anspruch 3,
**dadurch gekennzeichnet,**
**dass** der Totraumring (27) wenigstens eines der folgenden Merkmale umfasst:
- er ist, insbesondere durch die Radialwände (7), parzelliert ausgebildet;
- er ist in Axialrichtung (A) begrenzt.

5. Regenerativer Wärmetauscher (1) nach einem der vorhergehenden Ansprüche,
**dadurch gekennzeichnet,**
**dass** die geschlossene Dichtfläche (25) durch Kassetten (6) gebildet wird, wobei die Kassetten (6) insbesondere zwischen in Radialrichtung (R) weisenden Enden (11) der Radialwände (7) eingebaut sind und/oder die Kassetten (6), insbesondere auf ihrer vom Stator (22) abgewandten Innenseite, mit Querstreben (13) verstärkt sind.

6. Regenerativer Wärmetauscher (1) nach einem der vorhergehenden Ansprüche,
**dadurch gekennzeichnet,**
**dass** eine weitere glatte, geschlossene Dichtfläche (25) den Rotor (2) umläuft, wobei insbesondere beide glatten, geschlossenen Dichtflächen (25) voneinander in Axialrichtung (A) beabstandet sind.

7. Regenerativer Wärmetauscher (1) nach einem der vorhergehenden Ansprüche,
**dadurch gekennzeichnet,**
**dass** die Dichteinheit (5) eine verstellbare Dichteinheit (5) ist, die von einer Verstelleinrichtung (14) gegen die Dichtfläche (25) gedrückt ist, wobei insbesondere die Verstelleinrichtung (14) in Richtung des Rotors (2) federbeaufschlagt ist.

8. Regenerativer Wärmetauscher (1) nach einem der vorhergehenden Ansprüche,
**dadurch gekennzeichnet,**
**dass** die Axialdichtung (3) eine weitere Dichteinheit (5) umfasst, wobei die beiden Dichteinheiten (5) insbesondere wenigstens eines der folgenden Merkmale umfassen:
- sie sind miteinander verbunden und insbesondere gemeinsam verstellbar;
- sie sind zueinander in Axialrichtung (A) beabstandet;
- sie sind zueinander in Umlaufrichtung (U) des Rotors (2) beabstandet.

9. Regenerativer Wärmetauscher (1) nach einem der vorhergehenden Ansprüche,
**dadurch gekennzeichnet,**
**dass** die Dichteinheit (5) eine Vielzahl von Dicht-/Streifblechen (8) und/oder Dichtungsbürsten (28) umfasst, und dass die Dicht-/Streifbleche (8) und/oder Dichtungsbürsten (28) denjenigen Teil der Dichteinheit (5) bilden, der gegen die umlaufende geschlossene Dichtfläche (25) abdichtet.

10. Regenerativer Wärmetauscher (1) nach Anspruch 9,
**dadurch gekennzeichnet,**
**dass** die Dichteinheit (5) wenigstens eines der folgenden Merkmale umfasst:
- sie umfasst zwischen 2 und 20 Dicht-/Streifbleche (8), insbesondere zwischen 5 und 10 Dicht-/Streifbleche (8), und ganz besonders 8 Dicht-/Streifbleche (8);
- die Dicht-/Streifbleche (8) weisen eine Dicke von 0,5 mm bis 2,5 mm, insbesondere von 0,75 mm bis 2 mm und ganz besonders von 1 mm bis 1,5 mm auf;
- die Streifbleche (8) sind an einem Übergang zu einer dem Rotor (2) zugewandten Kante geschwungen, abgewinkelt oder abgeschrägt ausgebildet.

11. Regenerativer Wärmetauscher (1) nach einem der vorhergehenden Ansprüche, wobei der Rotor (2) in einer umlaufenden Ausnehmung (26) einen Triebkranz (15) mit einer Vielzahl von Eingriffelementen, insbesondere Triebkranzbolzen (17) umfasst,
**dadurch gekennzeichnet,**
**dass** die Eingriffelemente auf ihrer vom Stator (22) abgewandten Rückseite durch Sperrbleche (18) miteinander verbunden sind, die den Triebkranz (15) zu der Ausnehmung (26) hin zumindest teilweise abdichten.

12. Regenerativer Wärmetauscher (1) nach Anspruch 11,
**dadurch gekennzeichnet,**
**dass** die Sperrbleche (18) zum Rotor (2) hin nach innen gewölbt ausgebildet sind, wobei die Sperrbleche (18) insbesondere jeweils eine zurückgezogene Verbindungsfläche (29) und zwei zu dieser angewinkelte Rückzugsflächen (30) umfassen.

13. Regenerativer Wärmetauscher (1) nach Anspruch 6 und einem der Ansprüche 10 bis 12,
**dadurch gekennzeichnet,**
**dass** die Dichtflächen (25) auf entgegengesetzten Seiten des Triebkranzes (15) angeordnet sind.

14. Regenerativer Wärmetauscher (1) nach Anspruch 9 und einem der Ansprüche 10 bis 13,
**dadurch gekennzeichnet,**
**dass** die Streifbleche (8) im Bereich des Triebkranzes (15) eine Ausbuchtung (16) in Richtung des Rotors (2) aufweisen, um näher an die Eingriffelemente heranzureichen und so die freie Fläche zu vermindern, durch die Axialleckage strömen kann.

15. Kraftwerk, umfassend einen regenerativen Wärmetauscher (1) nach einem der vorhergehenden Ansprüche.

## Claims

1. A regenerative heat exchanger (1), comprising a rotor (2) designed as an intermediate storage unit with a plurality of radial walls (7), a stator (22) surrounding the outer circumference of the rotor (2), thereby creating a circumferential sealing gap (23) between the rotor (2) and the stator (22), and an axial seal (3) with at least one sealing unit (5) for local sealing of the sealing gap (23),
**characterized in that**
the sealing unit (5) is arranged in such a way that it protrudes from the stator (22) in the direction of the rotor (2) partially into the sealing gap (23), **in that** the sealing unit (5) extends across at least 80% of an axial height (h) of the rotor (2), and **in that** the rotor comprises a smooth, circumferential, essentially closed sealing surface (25).

2. The regenerative heat exchanger (1) according to claim 1,
**characterized in that**
the sealing unit (5) projects from the stator (22) far enough that it comes into contact with the sealing surface (25) of the rotor (2).

3. The regenerative heat exchanger (1) according to one of the preceding claims,
**characterized in that**
the rotor comprises a dead space ring extending between the intermediate storage unit and the sealing surface.

4. The regenerative heat exchanger (1) according to claim 3,
**characterized in that**
the dead space ring (27) comprises at least one of the following features:
- it is configured so as to be subdivided, in particular by the radial walls (7);
- it is delimited in the axial direction (A).

5. The regenerative heat exchanger (1) according to one of the preceding claims,
**characterized in that**
the closed sealing surface (25) is formed by cassettes (6), wherein the cassettes (6) are installed in particular between ends of the radial walls (7) pointing in the radial direction (R) and/or the cassettes (6) are reinforced with cross struts (13), in particular on their inner side facing away from the stator (22).

6. The regenerative heat exchanger (1) according to one of the preceding claims,
**characterized in that**
a further, smooth, closed sealing surface (25) circumferentially surrounds the rotor (2), wherein in particular both smooth, closed sealing surfaces are spaced apart from one another in the axial direction (A).

7. The regenerative heat exchanger (1) according to one of the preceding claims,
**characterized in that**
the sealing unit (5) is an adjustable sealing unit (5), which is pressed against the sealing surface (25) by an adjustment device (14), wherein in particular the adjustment device (14) is spring-loaded in the direction of the rotor (2).

8. The regenerative heat exchanger (1) according to one of the preceding claims,
**characterized in that**
the axial seal (3) comprises a further sealing unit (5), wherein both sealing units (5) comprise in particular at least one of the following features:
- they are connected with each other and are in particular jointly adjustable;
- they are spaced apart from one another in the axial direction (A);
- they are spaced apart from one another in a direction of rotation (U) of the rotor (2).

9. The regenerative heat exchanger (1) according to one of the preceding claims,
**characterized in that**
the sealing unit (5) comprises a plurality of sealing/strip sheets (8) and/or sealing brushes (28), and that the sealing/strip sheets (8) and/or sealing brushes (28) form the part of the sealing unit (5) that seals against the circumferential, closed sealing surface (25).

10. The regenerative heat exchanger (1) according to claim 9,
**characterized in that**
the sealing unit (5) comprises at least one of the following features:
- it comprises between 2 and 20 sealing/strip sheets (8), in particular between 5 and 10 sealing/strip sheets (8), and especially 8 sealing/strip sheets (8);
- the sealing/strip sheets (8) have a thickness of 0.5 mm to 2.5 mm, in particular 0.75 mm to 2 mm, and especially 1 mm to 1.5 mm;
- the strip sheets (8) are configured to be curved, angled or chamfered at a transition to an edge facing the rotor (2).

11. The regenerative heat exchanger (1) according to one of the preceding claims, wherein the rotor (2) comprises, in a circumferential recess (26), a ring gear (15) with a plurality of engagement elements, in particular ring gear bolts (17),
**characterized in that**
said engagement elements are connected to one another on their back side facing away from the stator (22) by filler sheets (18), which at least partially seal the ring gear (15) toward the recess (26).

12. The regenerative heat exchanger (1) according to claim 11,
**characterized in that**
the filler sheets (18) are curved inwardly toward the rotor (2), the filler sheets (18) in particular respectively comprising a retracted connecting surface (29) and two retraction surfaces (30) angled in relation to the connecting surface (29).

13. The regenerative heat exchanger (1) according to claim 6 and one of claims 10 to 12,
**characterized in that**
the sealing surfaces (25) are arranged on opposite sides of the ring gear (15).

14. The regenerative heat exchanger (1) according to claim 9 and one of claims 10 to 13,
**characterized in that**
the strip sheets (8), in the area of the ring gear (15), have a protrusion (16) in the direction of the rotor (2) in order to more closely extend toward the engagement elements and thus to reduce the free area through which axial leakage may flow.

15. Power plant, comprising a regenerative heat exchanger (1) according to one of the preceding claims.

## Revendications

1. Echangeur de chaleur régénératif (1), comprenant un rotor (2) conçu en tant que dispositif de stockage intermédiaire avec une pluralité de parois radiales (7), un stator (22) entourant la circonférence extérieure du rotor (2), créant ainsi un jeu d'étanchéité circonférentiel (23) entre le rotor (2) et le stator (22), et un joint d'étanchéité axial (3) avec au moins une unité d'étanchéité (5) pour une étanchéité locale du jeu d'étanchéité (23),
***caractérisé en ce que***
l'unité d'étanchéité (5) est agencée de telle sorte que, en s'étendant à partir du stator (22) dans la direction du rotor (2), elle fait partiellement saillie dans le jeu d'étanchéité (23), ***en ce que*** l'unité d'étanchéité (5) s'étend sur au moins 80 % de la hauteur axiale (h) du rotor (2), et ***en ce que*** le rotor comprend une surface d'étanchéité (25) lisse, circonférentielle, essentiellement fermée.

2. Echangeur de chaleur régénératif (1) selon la revendication 1,
***caractérisé en ce que***
l'unité d'étanchéité (5) fait saillie depuis le stator (22) au point d'entrer en contact avec la surface d'étanchéité (25) du rotor (2).

3. Echangeur de chaleur régénératif (1) selon l'une des revendications précédentes,
***caractérisé en ce que***
le rotor comprend un espace mort annulaire s'étendant entre le dispositif de stockage intermédiaire et la surface d'étanchéité.

4. Echangeur de chaleur régénératif (1) selon la revendication 3,
***caractérisé en ce que***
l'espace mort annulaire (27) comprend au moins l'une des caractéristiques suivantes :
- il est subdivisé, en particulier par les parois radiales (7) ;
- il est limité dans la direction axiale (A).

5. Echangeur de chaleur régénératif (1) selon l'une des revendications précédentes,
***caractérisé en ce que***
la surface d'étanchéité fermée (25) est formée de cassettes (6), les cassettes (6) étant installées en particulier entre les extrémités des parois radiales (7) pointant dans la direction radiale (R) et/ou les cassettes (6) étant renforcées avec des entretoises transversales (13), en particulier sur leurs faces intérieures orientées à l'opposé du stator (22).

6. Echangeur de chaleur régénératif (1) selon l'une des revendications précédentes,
***caractérisé en ce que***
une surface d'étanchéité lisse, fermée (25) supplémentaire entoure le rotor (2), les deux surfaces lisses, fermées étant en particulier espacées l'une de l'autre dans la direction axiale (A).

7. Echangeur de chaleur régénératif (1) selon l'une des revendications précédentes,
***caractérisé en ce que***
l'unité d'étanchéité (5) est une unité d'étanchéité réglable (5), qui est pressée par un dispositif de réglage (14) contre la surface d'étanchéité (25), le dispositif de réglage (14) étant en particulier soumis à l'action d'un ressort dans la direction du rotor (2).

8. Echangeur de chaleur régénératif (1) selon l'une des revendications précédentes,
***caractérisé en ce que***
le joint d'étanchéité axial (3) comprend une unité d'étanchéité (5) supplémentaire, les deux unités d'étanchéité (5) présentant au moins l'une des caractéristiques suivantes :
- elles sont reliées l'une à l'autre et peuvent en particulier être réglées ensemble ;
- elles sont espacées l'une de l'autre dans la direction axiale (A) ;
- elles sont espacées l'une de l'autre dans une direction de rotation (U) du rotor (2).

9. Echangeur de chaleur régénératif (1) selon l'une des revendications précédentes,
***caractérisé en ce que***
l'unité d'étanchéité (5) comprend une pluralité de plaques de bandelettes/d'étanchéité (8) et/ou de brosses d'étanchéité (28), et ***en ce que*** les plaques de bandelettes/d'étanchéité (8) et/ou les brosses d'étanchéité (28) forment la partie de l'unité d'étanchéité (5) qui vient en contact d'étanchéité contre la surface d'étanchéité circonférentielle fermée (25).

10. Echangeur de chaleur régénératif (1) selon la revendication 9,
***caractérisé en ce que***
l'unité d'étanchéité (5) présente au moins l'une des caractéristiques suivantes :
- elle comprend entre 2 et 20 plaques de bandelettes/d'étanchéité (8), en particulier entre 5 et 10 plaques de bandelettes/d'étanchéité (8), et plus particulièrement 8 plaques de bandelettes/d'étanchéité (8) ;
- les plaques de bandelettes/d'étanchéité (8) ont une épaisseur de 0,5 mm à 2,5 mm, en particulier de 0,75 mm à 2 mm, et plus particulièrement de 1 mm à 1,5 mm ;
- les plaques de bandelettes (8) sont prévues pour être incurvées, former un angle, ou être chanfreinées au niveau d'une transition vers un bord faisant face au rotor (2).

11. Echangeur de chaleur régénératif (1) selon l'une des revendications précédentes, le rotor (2), dans un évidement circonférentiel (26), comprenant une couronne dentée (15) avec une pluralité d'éléments d'engagement, en particulier de boulons (17) de couronne dentée,
***caractérisé en ce que***
lesdits éléments d'engagement sont reliés les uns aux autres sur leur face arrière côté opposé au stator (22) par des feuilles d'obturation (18) qui, au moins partiellement, étanchéisent la couronne dentée (15) par rapport à l'évidement (26).

12. Echangeur de chaleur régénératif (1) selon la revendication 11,
***caractérisé en ce que***
les feuilles d'obturation (18) sont incurvées intérieurement en direction du rotor (2), les feuilles d'obturation (18) respectivement comprenant en particulier une surface de liaison rétractée (29) et deux surfaces de rétraction (30) en angle par rapport à la surface de liaison (29).

13. Echangeur de chaleur régénératif (1) selon la revendication 6 et selon l'une des revendications 10 à 12,
***caractérisé en ce que***
les surfaces d'étanchéité (25) sont disposées sur des faces opposées de la couronne dentée (15).

14. Echangeur de chaleur régénératif (1) selon la revendication 9 et selon l'une des revendications 10 à 13,
***caractérisé en ce que***
les plaques de bandelettes (8), dans la zone de la couronne dentée (15), présentent une protubérance (16) dans la direction du rotor (2) de manière à s'approcher plus étroitement des éléments d'engagement et ainsi à réduire la zone libre par laquelle un écoulement axial pourrait se faire.

15. Installation de production d'électricité, comprenant un échangeur de chaleur régénératif (1) selon l'une des revendications précédentes.
